# EUROPEAN PATENT APPLICATION

(11) **EP 1 762 380 A2**
(43) Date of publication of application: **14.03.2007**
(21) Application number: 06026975.0
(22) Date of filing: 15.04.2004
(51) Int. Cl.: B32B 37/12, B32B 38/14, B32B 7/12, B41M 5/00

(54) **New laminates**

(62) Divisional of application: 04008936.9
(71) Applicant: Sihl GmbH, 52355 Düren (DE)
(72) Inventor: Buchbinder, Elisabeth, 52385 Nideggen (DE); Niemöller, Axel, 52355 Düren Niederau (DE)
(74) Representative: polypatent

(57) **Abstract**

The present invention refers to new 3-ply laminates of flexible webs, comprising one flexible web (1), which is permanently attached by a film forming adhesive to flexible webs (2) and (3) in a lamination process characterized in that both flexible webs (2) and (3) are paper webs and at least one outer surface of at least one of the flexible web (2) or (3) is treated to be capable of being printed by ink jet printing.

## Description

The present invention relates to special laminates which are ink jet printable by application of a suitable treatment or coating to one or both of the outer surfaces of the laminate. These kind of laminates can be used for digital data printing especially for high quality colour ink jet printing. A particular embodiment describes a 3-ply laminate with one outer surface being ink jet printable and the other surface to have a heat sensitive recording layer. This combination can be e.g. pre-printed by an ink jet process and can be personalised in a second step by a thermal printing step. Those products have exceptional mechanical properties by using reinforcing webs for lamination. The reinforcing web comprises films, foils or fleece materials.

The special laminates can be obtained by any wet lamination process, preferably by a roll-to-roll wet lamination process. One suitable roll-to-roll wet lamination process for adhering at least two flexible webs to produce a flexible laminate with extraordinary mechanical properties is described herein.

These kinds of laminates may be used for tags, e.g. for baggage tags, tickets, labels, envelopes, bags, packaging material, wide format banners, displays, billboards, panels and posters, sealing tapes, wallpapers. The laminates are readily printable on one or both sides with analogue or digital printing processes, e.g. offset printing, gravure printing, direct thermal printing, thermal transfer printing, ink jet printing, electrophotographic and dry and liquid toner laser printing, depending on the choice of the lamination webs.

Usually in a wet lamination process adhesion is achieved by coating a solvent or water born adhesive to one or both sides of at least one of the webs followed by combining these webs in a pressurised nip between two lamination rollers while the adhesive solvent or water is still present. Drying of the web(s) is achieved after lamination of the webs by heating means or in particular cases by absorption of water to the laminated paper. Thus, the wet lamination process is well known as an effective method to laminate paper to films.

EP-A 689 181 discloses a wet lamination process for paper-film-laminates comprising a corona treatment of the plastic film, coating a film with a water based adhesive and combining the coated film with a paper by means of two cold lamination rollers yielding a pressurised nip in which instant bonding of the two webs is achieved. The whole process is carried out under temperatures where the orientation of the plastic film is not impaired, which means that no heat drying is applied. This process is critical as most papers are highly water permeable and absorb water as well as the adhesive components very fast particularly under the increased pressure in the lamination nip. Therefore, good bonding strength can only be achieved at relatively high coat weight of the adhesive.

EP-A 056 452 describes a flexible laminates for packaging and their preparation, wherein a first lamina is coated with a room temperature curable adhesive, heating the lamina to remove water and solvent, superimposing a second lamina over the coated surface of the first lamina and roller nipping the laminate at a temperature from 25 to 150 °C, thereby bonding the laminate. As an adhesive an emulsion is described, consisting essentially of a copolymer emulsion of alkyl acrylate, alkyl methacrylate, styrene or vinyl ester, or mixtures thereof, ethylenically unsaturated carboxylic acids and optional comonomers and crosslinkers.

EP-A 011 274 discloses container packaging material , prepared as a laminate of paper and a plastic film, adhered to each other by using a molten resin adhesive without the use of a solvent. The paper and the film are bonded by entering a heated nip between the laminating rollers.

US 3,669,822 provides a process for preparation of a film-tissue paper laminate wherein an aqueous based adhesive is sprayed on a continuous plastic film and thereafter the tissue paper is attached to the coated plastic film. The laminate formed of paper and film is next passed through a pressurised nip between counter-rotating rolls of a mating station, which can be heated.

DE-A-01 64 196 discloses a recording layer for ink jet processes on a sheet-like base material which also includes papers of synthetic fibres, the layer containing both a cationic polymer and a polyvalent metal salt for fixing aqueous inks. In addition, water penetrable or water swellable binders, such as, for example, polyvinyl alcohol, and pigments, such as calcium carbonate, kaolin and urea/formaldehyde fillers may be present in such a layer. Dependent from the synthetic fibres in the base paper used this material has some degree of water resistance and tear resistance. Nevertheless cellulose fibres are swellable and the material behaves similar to paper. One of the issues with papers containing cellulosic fibres is the cockling phenomenon in ink jet printing with water based inks which means bad print flatness in imaged areas.

WO98/43821 describes a 2-ply heat transfer material which is a laminate of a latex impregnated ink jet printable paper with a non-woven web of natural or synthetic polymer, wherein the two layers are bonded by a heat-activated adhesive and pressing together the two layers in a nip.

EP-A 799 136 provides an ink jet printable highly water resistant recording material wherein a substrate paper comprises synthetic fibers and a recording layer on at least one surface containing highly porous abrasion-resistant pigments. Since the used substrate paper is water resistant itself lamination with a film is not necessary to provide material useful even under the influence of water.

DE 19535831 discloses a transparent laminate comprising two transparent paper dry-laminated by a solvent based adhesive on both sides to a transparent film. The transparent paper comprises a coating layer of a copolymer to prevent the transfer of the adhesive through the paper, since such a transfer decreases the printing quality. The adhesive is applied in amounts of 4 to 10 g/m dry coating weight. Application of wet adhesives is not possible since the transparent paper is very thin and tends to crinkle at contact with water.

Several patent applications refer to different approaches to improve ink jet printable papers, i.e. US 6,248,483 describes a transmission display material which is a laminate of an orientated polymer sheet bond to a very thin paper having a polyethylene layer on the other surface, which again is overlayed with an image layer; or EP-A 707 977 discloses a cast coated paper with high gloss prepared by coating a base paper with a layer comprising alumina and an adhesive and coating said layer with an overcoating layer comprising a resin, whereafter the overcoating layer is pressed against a heat drum to dry the overcoating layer; further US5,124,721 providing a 2 ply laminate of ink jet printable paper and a plastic film to diminish wrinkling of the paper when ink is applied. The laminate is prepared by pressing together the paper and the plastic film using a heat activated adhesive.

DE 19958095 A discloses a base paper which is coated on one side with an ink jet printable layer and on the other side with a heat sensitive recording layer and a 2 ply laminate of two papers, one having an ink jet printable surface, one having a heat sensitive surface, however, a laminate with a water impermeable layer is not described.

EP 779162 A discloses a recording sheet having an image recording layer which can be a ink jet printable or a thermosensitive recording layer which is coated on a laminate of a plain weave fabric or non-woven fabric bonded by an adhesive to a water-proof stretched resin film. The image recording layer is formed on the stretched resin film as a surface layer.

It is the object of the invention to provide ink jet printable laminates with high image quality. These laminate can be made of one water permeable ink jet printable web and one water impermeable web or from two water permeable webs laminated to both sides of a water impermeable web, whereby at least one printable web is used. In this case the printable side may be ink jet printable with high image quality as well or may have a heat sensitive recording layer. Using a polymeric film as water impermeable web leads to high mechanical strength of the laminate, particularly if biaxially oriented films are used. The lamination is achieved by standard lamination processes, preferably by the newly invented wet laminating process.

In a further embodiment the lamination of a paper type web with a non-woven web, e.g. polymeric fleece type webs, is described. This web combination is particularly useful for applications where high initiated tear resistance is necessary but water permeability of the laminate is required.

These laminated can be prepared by a lamination process for flexible webs comprising coating of at least one side of a flexible web (1) with a film forming adhesive, and contacting the adhesive side(s) of the flexible web (1) to a flexible web (2) on a transport roller while the combined webs are touching the transport roller from one side on a length of more than 5 mm without being pressurised.

By this process 3-ply laminates can be prepared, whereby a 3-ply laminate can be prepared in one step by first coating both sides of the flexible web (1) with the adhesive, then contacting the adhesive sides of the flexible web (1) each to flexible webs (2) or (3), respectfully, both at once or after each other on transport rollers.

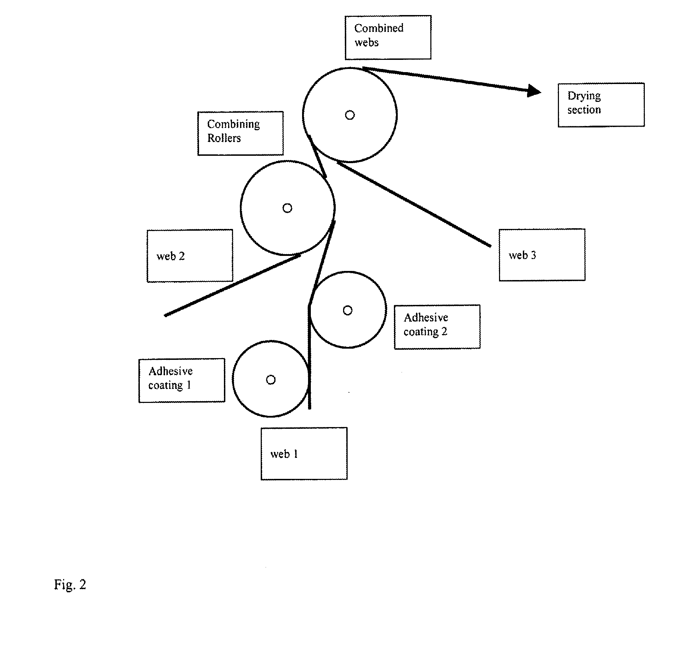

Surprisingly, it was found that using the laminating process herein described lamination quality is improved, lamination speed can be increased and adhesive coat weight can be reduced if the adhesive coated flexible web (1) is contacted to the flexible web (2) on a transport roller on a length of more than 5 mm without pressure as commonly applied in lamination stations in a roller nip. For the lamination result it is not important which of the webs is in contact with the roller or whether the webs are attached simultaneously or separately (e.g. the laminate is contacting the roller first from one side, than from the other side as shown in Figure 2).

The roll-to-roll lamination process for flexible webs comprises the coating of at least one side of a flexible web (1) with an film forming adhesive, contacting the adhesive side(s) to a flexible web (2) on a transport roller while the combined webs touch the transport roller from one side on a length of more than 5 mm. In one embodiment a process is claimed in which the flexible web (1) is coated on both sides with an film forming adhesive prior to combining with flexible webs (2) and/or (3) on both sides to produce a 3-ply-laminate.

In a particularly preferred embodiment the process is a wet lamination process. In such case the adhesive used is an aqueous or water borne adhesive or a solvent based adhesive. In a wet lamination procedure the attachment of the flexible webs (1), (2) and (3) on the transport roller is followed by a drying step.

In a wet lamination process it is preferred that at least one of the flexible webs is water or solvent permeable to allow the water or solvent to evaporate from the laminate during the drying step. In a particular preferred embodiment the flexible web (1) is a water or solvent impermeable web and the webs (2) and/or (3) are water or solvent permeable webs. In the following the process is described and explained by this preferred embodiment, however, it is particularly pointed out that the present lamination process is not restricted to the use of aqueous adhesives, but can be carried out with each type of adhesive which can be applied fast enough not to limit the speed rate of the process.

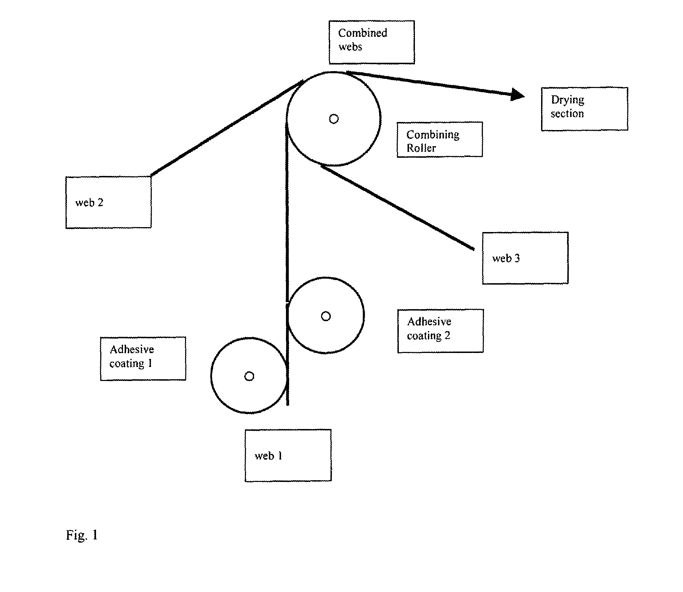

Fig. 1 shows one embodiment of the process of combining 3 webs to produce a 3-ply-laminate. A water impermeable web (1) is first coated on both sides with an aqueous adhesive. The wet adhesive sides of the impermeable web (1) are contacted on one single transport roller to the water permeable webs (2) and (3) while touching this transport roller on a defined length, which is at least 5 mm. The combined webs leave the contact roller to enter a drying section for removal of water from both sides of the web to form polymeric adhesive films between the three webs. These thin adhesive films ensure high bond strength between the three webs.

Fig. 2 shows an alternative embodiment of the process of combining 3 webs to produce a 3-ply-laminate. A water impermeable web (1) is first coated on both sides with an aqueous adhesive. The wet adhesive sides of the impermeable web (1) are contacted while touching two different single transport rollers with the water permeable webs (2) and (3) while touching each of the transport rollers on a defined length (at least 5 mm each). The combined webs leave the second transport roller to enter a drying section for removal of water from both sides of the web to form polymeric adhesive films between the three webs. These thin adhesive films ensure high bond strength between the three webs.

The wet lamination process is particularly designed for webs with very different water permeability. This permeability can be easily evaluated by water vapour transmission measurements (DIN 53122). Thus, the water impermeable web (1) should have no or very low water vapour transmission to ensure that the adhesive stays on the surface prior to combining with the water permeable web (2) or (3). The water permeable web has to have a sufficient water permeability to ensure that the water from the aqueous adhesive can be removed in the drying step after combining the webs. Preferably, the minimum water vapour transmission is 5og/m²/24h minimum preferably more than 150g/m²/24h at 20°C/85% relative humidity.

The flexible web (1) can be a water permeable web (e.g. the same as described below for flexible web (2)) or a water impermeable web, however, preferably is a water impermeable web. The water impermeable web (1) is typically a continuous flexible web made of plastic film, metallized plastic film or metal. Suitable plastic films can be made of polyolefine, e.g. polyethylene, polypropylene, or polyester, e.g. polyethylentherephthalate, polyurethane, polyacrylate, polycarbonate, polyvinylchloride or polyamide, polyimide, polystyrene, cellulose acetates, biodegradable films (e.g. corn-starch or polyaminoacids based) and are non-oriented, unidirectionally oriented or biaxially oriented. Examples for films are Mylar and Melinex biaxially oriented Polyester film of DuPont, Valeron Polyethylene Film of VanLeer, cast Polypropylene films, monoaxially oriented Polypropylen films or biaxially oriented Polypropylene films (BOPP). Metal foils are made e.g. from copper or aluminium. Further the flexible web (1) can be a woven or non woven material, e.g. a fleece or fabric of cotton or plastic, e.g. made from Polyolefine, Polyester, Polyamide, a semipermeable film or foil, so that water or solvent permeability is restricted, e.g. a film with small holes or a porous film. The flexible web (1) can be pre-coated or pre-treated, e.g. by corona, flame or chemical treatment prior to lamination.

The thickness of the flexible films, foils or non-woven fleece are preferably in a range of 3 µm to 250 µm. Thinner webs might be mechanically too weak. Thick webs up to 250 µm have still enough flexibility for the lamination process.

The water impermeable web can be treated inline in the lamination process by a corona discharge, a flame treatment or a chemical etching pretreatment, e. g. by a fluor treatment on one or both sides of the web prior to adhesive coating. This pre-treatment is able to increase the surface tension and leads to improved wetting and adhesion of the water based film forming adhesive. It is commonly not necessary for already treated films. Polyolefine films, particularly polypropylene films, however, are critical to adhere and preferably are treated to ensure perfect bonding of the adhesive.

The flexible web(s) (2) and/or (3) as well can be water permeable or water semipermeable, however is/are preferably water permeable web(s). The water permeable web (2) or (3), respectively, can be made of paper, kraft paper, water resistant paper, impregnated paper, e.g. flame retardent paper, coated paper, heat sensitive recording paper, cast coated paper, fibre reinforced paper, transparent paper, cardboard, woven or non-woven fabrics or fleece made of cotton, polyester, polyolefine or polyamide. The flexible web(s) (2) and/or (3) is/are preferably with a weight in a range of 10 g/m² to 300 g/m².

In most applications of the laminates the flexible web(s) (2) and/or (3) is printed with information or images, e.g. text, bar codes, graphics, photographic images etc. Therefore, these webs are chosen to be readily printable with analogue or digital printing processes, e.g. offset printing, gravure printing, direct thermal printing, thermal transfer printing, ink jet printing, electrophotographic and dry and liquid toner laser printing,.

In one preferred embodiment at least one of the water permeable webs (2) and (3) (if (3) is present) is capable of being printed on at least one surface, preferably by ink jet printing on the outer surface. The at least one (outer) surface of the water permeable web (2) or (3) preferably is capable to be printed with high print quality by ink jet inks which are water based, solvent based, oil based, wax based or UV curing inks. Examples for printing systems are label printers, e.g. from VIPColor, Canon, small format office or photo printers from HP, Canon, Epson, Lexmark, wide format printers from HP, Canon, Epson, ColorSpan, Kodak, Xerox, Seiko, Mimaki, Roland, Mutoh and super wide format printers from NUR Macroprinters. Treatment or coating of paper surface for ink jet printing is preferred to avoid printing artefacts like bleeding, feathering, low colour brilliance, mottling etc. It is particularly preferred to use coated papers for colour ink jet printing systems which are able to yield high colour gamut and sharp, crisp images and text. Even photographic print quality can be achieved using the correct choice of ink jet coated paper for the lamination process..

For improved printability the outer surface of the printable surface of the web (2) or (3) can be pre-treated or coated with at least one ink receiving coating, which comprises for example special sizing of the paper surface, e.g. cationic sizing or pigments and/or organic binders. Preferred pigments consist of crystalline or amorphous oxides or hydroxides of metals or semimetals as for example silicium, magnesium, calcium, aluminum, or zinc. Preferred pigments are silica, e.g. precipitated, fumed or sol-gel type silica, gibbsite, bayerite, nordostrandite, boehmite, pseudoboehmite, diaspore, alumina, particularly fumed alumina, alumina hydrate, magnesium silicate, basic magnesium carbonate, titanium (di)oxide, aluminium silicate, calcium carbonate, e.g. precipitated, talc, clay, hydrotalcite, kaolin or mica, inorganic matters such as diatomite, organic matters such as resinous pigments made of urea-formalin resins, ethylene resins, styrene resins, acrylate, polyamide resins or combinations thereof. Particle size and surface area are main parameters for choosing pigments for ink jet coatings.

Furthermore, the coating may render the prints waterfast even though water based dye inks are used. This effect is commonly achieved by adding cationic moieties or mordants (e.g. cationic polymers) to the surface of a porous ink jet layer. As the ink jet coating preferably comprises inorganic pigments a binder or binder system is necessary to strengthen the coating. Water soluble polymers like polyvinylalcohole, polyvinylpyrrolidone, gelatine, starch, cellulosic polymers as well as polymer emulsions are used as binder.

The ink jet printable surface can be matte, semi-matte or glossy, whereby the gloss levels can be in a range between 1% and 90% gloss at 60° measuring angle (ISO 2813). Matte coatings are achieved with inorganic pigments, e.g. silica, with mean particle diameters of 1 to 20 micron. Glossy ink jet coatings are designed from particles below 1 micron, particularly in the range or 20 nm to 300 nm. These coatings have to have a very smooth surface for a high gloss effect. This can be achieved e.g. in a cast coating process which preferably comprises a precoated paper with a special glossy top coating. These papers have a very fine porous coating structure which is still water vapour permeable. Papers with barrier coatings or film forming ink jet layers are possible to be used for lamination as well.

In one further preferred embodiment both sides of a 3-ply laminate have an ink jet printable surface. Both sides printing is particularly useful for applications like tickets, tags or as wide format banners for advertising. Alternatively, one of the water permeable webs (2) or (3) has a heat sensitive recording layer, on the non-laminated surface of the paper. Heat sensitive recording layers comprise chemicals which undergo colorant formation by application of heat. Chemical reactions commonly used for this process are the ring opening of special lactone (leuco) dyes by special organic developers, or the reaction of ferrous salts, e.g. ferrous stearate, with polyhydroxy compounds, e.g. gallic acid. Often an undercoating is used to improve the sensitivity. A top coating can be applied to improve resistance of the thermal coating to mechanical or chemical impact. Laminates with for one side ink jet printing and one side thermal printing on the heat sensitive coating are particularly useful, where ink jet printing can be used for high quality color printing and thermal printing for adding personal information, e.g. for tickets, tags and labels.

The ink jet printable and/or heat sensitive surface can be also applied after the lamination of (2) or (3) webs has taken place. In this case the 3- ply laminate is coated or treated on one or both sides to improve the printability in the ink jet printing process after the lamination step.

If the water vapour permeability is too low for the preferred new wet laminating process a different lamination process, e.g. hot melt adhesive lamination, dry lamination or lamination with 100 % curing adhesives is used, preferably using the web combining technology described by the main embodiments and in the Fig. 1 and 2. Ink jet papers or heat sensitive papers with sufficient water vapour transmission can be effectively laminated by the new laminating process of the present invention using wet lamination with water based adhesives and the described web combining process. Of course, all other kind of lamination procedures can be applied to form the ink jet printing and ink jet/thermal printing laminates of the present invention.

With the process described herein "3-ply laminates" can be made, comprising each combination of flexible webs (1), (2) and (3). In a preferred embodiment the laminate is a 3-ply laminate wherein a water impermeable web (1) is attached with both sides to water permeable webs (2) and (3), whereby at least one non laminated surface of the ready-made laminate is (ink jet) printable or one surface is ink jet printable while the opposite surface has a heat sensitive recording layer, respectively.

Another embodiment of the present invention is a laminate wherein the water permeable web(s) (2) and/or (3) is/are a non-woven material, e.g. a fleece made of plastic fibres, e.g. made from polyolefine, polyester, polyamide, available according to a dry laid, wet-laid or spunbond process. This fleece has a weight of 10 g/m² to 300 g/m². A laminate comprising a flexible web (1) attached on one or both surfaces with such a fleece is e.g. particularly suitable because of its soft surface as a wrapping/packaging material for mechanically sensitive goods, e.g. easy to scratch or breakable products. For cost-effectiveness the inner web (1) can be a water permeable paper layer as the non-woven web has a good tear resistance by itself.

The water permeable web(s) (2) or (3) preferably have a high water permeability to ensure that the water from the aqueous adhesive can be removed in the drying step after combining the webs. Preferably, the minimum water vapour transmission is 50g/m²/24h minimum preferably more than 200 g/m²/24h at 20°C/85% relative humidity.

For effective bonding of water based adhesives the water has to be removed so that a polymeric adhesive film is formed. As the water cannot penetrate in or through the water impermeable web it is solely removed by the absorption and/or penetration into the water permeable web and is substantially removed from the combined webs in the drying section.

The film forming adhesive is coated in a lamination process to a wet coating weight of 1 g/m² to 50 g/m², preferably to a weight of 2 g/m² to 20 g/m² particularly preferred to a weight of 3 g/m² to 15 g/m² in case of paper to film or foil lamination. The adhesive solid content is preferably in the range of 30 % to 60 % by weight, typically at about 50 % by weight. The adhesive can be selected from any adhesive known as to be used for lamination processes, which are for example water based adhesives, solvent based adhesives, hot melt adhesives or solvent free chemically curing adhesives, but is preferably a water based adhesive.

The water based adhesive can be any suitable water based adhesive known by a skilled person, but is preferably selected from emulsions of polymers or (co)-or (ter-)polymers, including core shell emulsions, made from acrylate, styrene-acrylate, butadien-styrene, butadien-styrene-acrylate, vinylacetate, ethylene-vinylacetate or polyurethane or polyester. These polymers typically are dispersed at 30% to 60 % solid content in water by means of emulsifiers, stabilizers, viscosity modifiers and protection colloids. Particularly, low Tg of the polymer improves adhesive forces to both surfaces to the water impermeable as well as to the water impermeable web. Therefore, Tg preferably is lower than 40°C. Adhesion to both surfaces is also dependant from the chemical nature of the (co)-polymer which has to ensure bonding interactions to the different surfaces. Crosslinking of the polymer emulsions by crosslinking agents like diisocyanates, formaldehyde, glyoxal, epoxy-resins or aziridine resin can be used as a means of improving water resistance of the bonding. Alternatively, self-crosslinking copolymers can be used as the adhesive.

Furthermore, water soluble components, particularly water soluble polymers, can be used as adhesives or in combination with the above mentioned water based emulsions. Examples for such polymers are polyvinylalcohol, hydroxyethylcellulose, methylcellulose, carboxymethylcellulose, starch, casein etc. Preferably, crosslinkers are added to the adhesive formulation if water soluble polymeric components are present.

The coating process starts with unwinding of the different flexible webs from rolls in separate unwinding stations. The process described herein is able to be run at high speed, meaning 30 m/min to 300 m/min. Preferably, the web rolls are changed in an automatic roll change ("flying splice") so that the process can be run continuously.

The adhesive is applied in one or more coating heads with a wet coating weight in the range of 1 g/m to 50 g/m², preferably 2 g/m² to 20 g/m² and particularly preferred 3 g/m² to 15 g/m² in case of paper to film or foil or fleece lamination. This is achieved by the selection of the suitable coating process which should be able to apply the adhesive in a homogeneous and reproducible manner. Suitable coating methods include but are not limited to direct roll coating, reverse roll coating, spray coating, Meyer rod metering, air knife coating, gravure coating, flexo printing and die coating. The adhesive formulation has to be adapted to the coating head concerning viscosity, surface tension, foaming behaviour etc. A typical viscosity range applying the water based film forming adhesive is 10 mPa*s up to 500 mPa*s.

The laminating process is relating closely to the lamination of two or three webs. This wet lamination process is specially designed for webs with very different water permeability. The wet adhesive side(s) of the water impermeable web (1) is/are contacted on a transport roller to (a) water permeable web(s) (2) or (3), respectively, while touching this transport roller on a defined length of more than 5 mm. It is very pointed out that the combination of the webs is carried out without any pressure, particularly without pressure from a pressurised lamination roller. The invention excludes any pressure at this stage of the process meaning that the webs are combined "freely" on a single roller or two single rollers, respectively. The webs are just hold and lead to the combining roller by the web tension necessary to transport all two or three webs through the lamination process without any issues like from wrinkles, tearing of the web, uncontrolled web guidance etc. Typical web tensions are between 50 N and 1000 N per meter web width. It was surprisingly found that the adhesion between the webs is deteriorated by applying pressure in a two roller lamination nip. Such pressure seems to increase the penetration of the wet adhesive into the water permeable web with the consequence that the adhesion is strongly impaired, particularly at low wet coat weights of the adhesive. Therefore, a process without any pressure is advantageous in respect to strong and reproducible bonding as well as cost effectiveness from low adhesive coat weights.

Depending on water permeability and smoothness of the water permeable web (2) or (3) the coat weight of the adhesive has to be selected to ensure strong bonding. It was found that smoother webs are able to be laminated with lower adhesive coat weights than rougher webs, e.g. a smooth glossy film coated with 3 to 6 g/m² of a 50% solid content adhesive can be laminated to a smooth paper with a smoothness of 150 to 200 Bekk*s. The water vapour transmission must be high enough to effectively yield a strong bonded laminate in the drying step. Higher water vapour permeability ensures quick drying of the water through the water permeable web during the drying step. Vice versa higher wet coat weights up to 50 g/m² are necessary if the adhesive is coated on highly absorbing water permeable webs and/or rough surfaces. Nevertheless, the invented process is able to save 20 % to 60 % of adhesive in comparison to the commonly used roller nip lamination process where pressure penetration in the nip forces the wet adhesive into the water permeable web. This portion of the adhesive is ineffective in bonding the webs.

The combined webs leave the contact roller as an integral web which enters a drying section for removal of water to form a polymeric adhesive film between both webs. After drying the laminate is ready for rewinding, preferably after cooling to room temperature by forced air or in contact to cooling rollers. The rewound laminate is ready to use and has the final bond strength.

In one embodiment (shown in Figure 1) the process is able to combine three webs to produce a 3-ply-laminate. A water impermeable web (1) is first coated on both sides with an aqueous adhesive. The wet adhesive sides of the web are then contacted on one single transport roller to the water permeable webs (2) and (3) while touching this transport roller on a defined length. The combined webs leave the contact roller to enter a drying section for removal of water from both sides of the web to form two polymeric adhesive films between the three webs. These thin adhesive films ensure high bond strength between the three webs.

In an alternative embodiment (shown in Figure 2), the wet adhesive sides of the water impermeable web (1) are contacted on two single transport rollers to the water permeable webs (2) and (3) while touching each of the transport rollers on a defined length, which is at least 5 mm. The combined webs leave the second transport roller to enter a drying section for removal of water from both sides of the web to form polymeric adhesive films between the three webs.

Preferably, drying of the wet adhesive is forced by IR-dryers or heat in a drying section of the lamination machine. Heat can be applied for example in form of contact heat or forced heat air flow in the drying section. If there is no drying or insufficient drying the laminate may be too humid leading to adhesion issues, flatness problems in converting and application and possible microbiological deterioration. Therefore, the main purpose of the drying step is to remove excess water from the adhesive through the water permeable web and to achieve a product which is in equilibrium with common environments, e.g. 50 % r.h. at room temperature. One of the most important reasons for drying is to achieve the final bonding of the laminate before rewinding the web.

Forced heat can be applied by IR-dryers, forced heated air, e.g. from nozzles in a drying oven or contact heat from heated rollers which are in contact with the water impermeable web side of the combined webs. In case of 3-ply laminated the drying has to take place on both sides of the web in the same extent in order to obtain equivalent relative humidities of both water permeable webs (2) and (3). Typical temperatures for heated air are 40° to 180°C, preferably 50 ° to 120 °C. In case of paper the surface temperatures of the outer surface of the combined webs does not exceed 90 ° C to 100 °C. Particularly, in case of heat sensitive papers the surface temperature in the drying step has to be limited avoid chemical reaction of the components in the heat sensitive coating(s). In most cases it must not exceed 50 °C to 60 °C.

The laminate is rewound in the roll-to-roll lamination process and is ready for converting e.g. to small rolls or sheets. In case of using adhesives with slowly reacting crosslinkers like polyisocyanates curing should have taken place before further conversion is started. Some properties like water-resistance may improve with time after lamination particularly if a crosslinking type adhesive or a crosslinking additive is used.

The final laminates of the water impermeable web with one or two water permeable webs are useful for but not limited to the following applications: tags, tickets, labels, envelopes, bags, wide format banners, displays, billboards, panels and posters, sealing tapes, baggage tags, wallpapers and packaging material. Particularly, the water permeable web is imprintable by analogue or digital printing processes. Preferably at least one side of the laminate is printable, preferably in an ink jet printer. Generally, the water impermeable films are selected to yield high mechanical strength of the laminate. The tensile strength of the laminate according to ISO2493 is typically between 40-3000N/15mm. If biaxially oriented plastic films are used a high initial tear strength is achieved while tear propagation might be low. With uniaxially oriented films high tear strength is achieved only in the cross direction to the orientation. Non-oriented plastic films or fleeces are useful for both good initial tear resistance as well as good propagation tear.

A high opacity of the laminate is preferred for certain applications like envelopes or both sides ink jet printed wide format banners. This is achieved preferably by using thick water permeable webs, white or coloured opaque films, films which are metallized on one or both sides, metal foil(s), made e.g. of aluminium or copper, and/or opaque adhesive(s). Particularly, papers with high opacity and good fibre formation are preferred.

In another embodiment the adhesive is coloured or opaque in order to increase the opacity of the laminate or to achieve optical effects on the laminate, e.g. under light transmission conditions.

The presently described roll-to-roll wet lamination process is especially able to provide flat laminates. This is mainly due to the pressure free attachment of the webs with low adhesive coat weight. This ensures that the water permeable web (2) and/or (3) is bonded without excessive adhesive penetration into the web structure, e.g. pores in the paper, and without change of the paper structure by excessive water. Furthermore, the drying step is able to dry and recondition the final laminate before rewinding and converting takes place.

The resulting laminates show good bonding strength of the webs even under adverse environmental conditions. Mechanical impact as peeling of the webs, fold resistance etc is optimised depending on the application. Particularly, water resistant laminates are achieved by selecting the suitable adhesive, films and papers. A main object of the laminating process and the newly developed products of the present invention is to provide reinforced materials with high mechanical resistance to tearing. For this purpose, oriented plastic films are preferred for high uninitiated tear strength while non-woven webs are used if initiated tear strength has to be optimized.

The invention is set forth but not limited by the following examples:

Test methods:
Water vapour transmission is measured after DIN/EN 53122
Lamination adhesion: After production the resulting laminate is drawn by hand or automatically by a tensile testing machine starting at non-laminated edges in cross direction of the web. The lamination adhesion is excellent, if the weakest web (e.g. the paper) has been disrupted and delamination did not occur.
Water fastness of laminates: the finished laminate is dipped into tap water at room temperature for 24 h. The laminate has to be unimpaired after that time; there must not be any delamination of the single webs. For more demanding applications the wet laminate shall not be able to be easily disrupted by a "peeling of" test. The test result is valued in steps from 1 to 5, wherein 1 being no peel possible to 5 easily removed web.
Mechanical strength: Uninitiated tear resistance, initiated tear resistance and tensile strength are measured according to ASTM-D-1004, DIN53363 and ISO 1924, respectively.
Flatness: is measured according to ISO15457 part 1 (thin flexible cards). The flatness depends on the material used. The required flatness strongly depends on the application.

### Example 1 (not part of the present invention)

A 40 µm OPP film web Type Bimo Stilan TP both sides treated with corona discharge to a minimum surface tension of 40 mN/m is unwound and coated on one side by a roll application coating head with an 50 % acrylic emulsion adhesive with a glass transition of 0°C to a wet coating weight of 8 g/m², followed by combining this film web on a combining roller of 40 cm diameter on a contact length of 250 mm with a 50 g/m² commercial printing paper with a water vapour transmission of 2000g/m²/24h. The combined webs are heated in a drying section with contact heat on 4 drying cylinders at 60 °C, 70 °C, 80 °C and 80 °C, respectively. The bonded product is cooled on cooling cylinders before rewinding. The line speed was 120 m/min. The product has excellent lamination adhesion, is readily printable on the paper side and has good water resistance of rating 1. It is tear resistant and has an uninitiated tear resistance of 30N according to ASTM-D-1004.

### Example 2

A 3-ply laminate is produced using the same raw materials as in Example 1, except that two paper webs are used for lamination of both sides of the plastic film. After unwind the film is coated on both sides with the above mentioned adhesive to yield 8 g/m² wet adhesive coat weight on each side prior to combining all 3 webs on one roller on a length of 150 mm as shown in Fig.2 . The combined webs are dried with contact heat from each 4 drying cylinders touching the combined webs from both sides followed by the cooling and rewinding step. This symmetrical product has very good flatness under different environmental conditions, is readily printable and shows excellent water-resistance. The uninitiated tear resistance is 35N according to ASTM-D-1004, whereas tensile strength is 180N/15mm according to ISO1924.

### Comparative Example 3

The process of Example 2 is reproduced except that the lamination is achieved by two lamination rollers - one made of stainless steel the other made of rubber - building a lamination nip of about 2mm under a line pressure of 3 bars. The lamination adhesion of the resulting laminate was bad; the laminate can be easily split by hand. In the waterfastness test the paper web disintegrated from the film without further mechanical impact (rating 5). The lamination adhesion and water resistance was improved to a rating of 3 when the coating weight of the adhesive was increased to 20 g/m² on each side of the film. Drying issues occurred by this increase and the process speed had to be slowed down.

### Example 4

The process of Example 2 is reproduced except using a 90 g/m² one side ink jet coated matt paper from Sihl Code 3850 with a water vapour permeability of 700g/m²/24h. The non coated side of the paper is laminated to one side of the water impermeable corona treated 40 µm OPP film while the other side of the film is laminated to the above mentioned 50 g/m² paper. The product is printed on the ink jet coated surface by a wide formate colour image with an oil based ink jet ink on a Seiko IP4500 wide format printer. The resulting print has high water resistance (rating 1), high uninitiated tear strength (37 N according to ASTM-D-1004) and can be displayed short term outdoors.

### Example 5

A both sides ink jet printable free hanging banner material for wide format graphics is produced by coating a 100 µm biaxially oriented white Polyethylenetherepthalate film (Melinex 347 from Dupont) on both sides with a solvent based lamination adhesive of Polyurethane type with Polyisocyanate as crosslinker and 2 % of carbon black followed by drying off the solvent . The non-coated side of two 125 g/m² ink jet cast coated papers are laminated onto both sides of the adhesive coated film in a lamination station under pressure and temperature (3 bar, 40 °C). The lamination adhesion increases within 5 days due to the crosslinking of the adhesive until the product shows the final excellent adhesion. The product has high tensile strength (320 N/15 mm), is glossy (65% gloss at 60 °) on both sides, has a water resistance (rating 1) and has a very high opacity (> 99,5 %, ISO 2471) due to the white film, the thick papers and the coloured adhesive. The laminate was printed on both sides with an ink jet printer Epson 9000 with water based dye inks. The image has photographic quality with high gloss on both sides. Cockling or other prints artefacts did not occur.

### Example 6:

A 3-ply laminate comprising heat sensitive paper KLS46 manufactured by Kanzan, a 30 µm OPP film and 90 g coated ink jet paper Code 3850 manufactured by Sihl is produced by coating the film on both sides with a hot melt adhesive at 170 °C with a coating weight of 7 g/m² prior to combining the three webs on a combining roller (without any pressurized nip) on a length of 30 mm with the hot adhesive surface. The heat sensitive layer is not impaired by the temperature of the adhesive. The combined webs are rewound. The product is tear resistant (28 N uninitiated tear strength) and water resistant (rating 1) with excellent adhesion of the webs to each other (rating 1). The product was converted to small tickets and the final ticket was produced by applying in a first step a high quality ink jet print on the ink jet coated surface by a VIPColor VP 2020 colour label printer followed by personalising the ticket on the heat sensitive layer by a thermal printer including a bar code to yield entrance tickets for a bar code accession system with colour advertising on the back side. The advantage of the inventive material is the short term production of high quality labels with varying information on both sides.

### Example 7:

A 3-ply paper/non-woven/paper laminate is produced by coating both sides of a 70g polyester based spunbonded non-woven T7270 web manufactured by Freudenberg with a water-based Polyurethane emulsion adhesive with a wet coating weight of 10g/m² each side prior to lamination with 70 g/m² latex impregnated papers Neobond manufactured by Fibre Mark on both sides of the non-woven web according to the process shown in Figure 2. The contact area on the combining roller was 25 mm. The product has a good flatness and an initiated tear resistance of 39N according to DIN53363. The laminate is readily printable on both sides by offset printing and can be used e.g. as water resistant tags (rating 1) for marking of goods which are stored outdoors, e.g. for tags for steel drums or as tag for plants.

### Example 8

A one side ink-jet printable 3-ply laminate with a tear resistant non-woven web is produced by coating both sides of a spunbonded non-woven web with a water based adhesive with a wet coating weight of 10g/m² each as described in example 7. The non-coated side of an ink-jet cast coated paper and a commercially 50g/m² paper, respectfully, are laminated to the both sides of the adhesive-coated non-woven web according to the process shown in Figure 2. The product has initiated tear resistance (42 N) and excellent flatness after printing with water based inks. It is printed by an HP Designjet 5500 printer with pigmented ink jet inks with an image distributed over several parallel webs. The final prints are applied in several webs side by side by a commercial wallpaper adhesive to a wall resulting in a uniquely customised wall graphics.

### Example 9

A 3-ply paper/film/paper laminate with a needled 50µm biaxially oriented clear polyester film with small holes distributed over the whole web is produced by coating the inner surfaces of the two paper plies of a 50 g/m² commercial printing paper having a water vapour transmission of 2000g/m²/24h with a water based styrene-acrylic copolymer adhesive having a glass transition of 5 °C. A wet coating weight of 12g/m² was applied prior to combining these film webs on two combining rollers of 30 cm diameter within a contact length of 35 mm with the needled PET film applying twice the production process shown in Figure 1. The product has water vapour transmission of 78 g/m²/24h which is improved compared to the comparable laminate without holes in the film. Nevertheless the product has high water resistance (rating 1) and a high uninitiated tear resistance of 54 N.

### Example 10 (not part of the present invention)

A two ply paper/fleece laminate is produced by coating one side of a 50g/m² paper- with an acrylic dispersion with a wet coat weight of 14g/m² prior to lamination to a 40g/m² spunbonded non-woven/fleece. The resulting laminate has good initiated and uninitiated tear resistance and can be used due to the soft fleece side as wrapping material for scratch sensitive products like lenses.

As can be seen in the examples several different combinations are possible using the present invention. Particularly the following combinations of webs are preferred to obtain a laminate according to the invention:

| web (2) or (3), respectively | web (1) | web (3) or (2), respectively |
|---|---|---|
| Paper | Paper | Paper |
| Paper | Film | Paper |
| | | |
| | | |
| | | |
| | | |
| paper | Fleece/non-woven | Paper |
| | | |
| ink jet printable paper | fleece/non-woven | Paper |
| ink jet printable paper | fleece/non-woven | ink jet printable paper |
| ink jet printable paper | fleece/non-woven | Heat sensitive paper |
| | | |
| | | |
| | | |
| ink jet printable paper | film | ink jet printable paper |
| ink jet printable paper | film | Heat sensitive paper |
| | | |
| ink jet printable paper | film | Paper |
| | | |
| | | |

## Claims

1. 3-ply laminate of flexible webs, comprising one flexible web (1), which is permanently attached by a film forming adhesive to flexible webs (2) and (3) in a lamination process **characterized in that** both flexible webs (2) and (3) are paper webs and at least one outer surface of at least one of the flexible web (2) or (3) is treated to be capable of being printed by ink jet printing.

2. Laminate according to claim 1, wherein in case that both flexible webs (2) and (3) are ink jet printable the webs are not both transparent papers.

3. Laminate according to claim 1 or 2, wherein one of the flexible web (2) or (3) is capable of being printed by ink jet printing and one of the flexible web (2) or (3) has a heat sensitive recording layer.

4. Laminate of flexible webs according to any of claims 1 to 3, **characterized in that** the surface of the ink jet printable web is capable to be printed by ink jet inks which are water based, solvent based, oil based, wax based or UV curing inks.

5. Laminate of flexible webs according to claim 1 to 4, **characterized in that** the outer surface of the ink jet printable laminate is coated with at least one ink receiving coatings.

6. Laminate of flexible webs according to claim 5 **characterized in that** the ink jet receiving coating(s) comprise(s) pigments and/or organic polymeric binders.

7. Laminate of flexible webs according to any of claims 1 to 6, **characterized in that** the ink jet printable surface is matte, semimatte or glossy with gloss levels between 1 % and 90 % gloss at 60° measuring angle.

8. Laminate according to any of claims 1 to 7, **characterized in that** the flexible web (1) is a water semipermeable or impermeable web, a non-woven fleece or a paper.

9. Laminate according to claim 8, wherein the water impermeable web (1) is a plastic film, metallized plastic film or a metal foil.

10. Laminate according to claim 9, whereby the plastic film is made of polyester, polypropylene, polyethylene, polystyrene, polyamide, polyurethane, polyacrylate, polycarbonate, polyvinylchloride, polyimide, cellulose acetates, biodegradable films or combinations thereof, or the metal foil is copper or aluminium foil.

11. Laminate according to claim 8 whereby the non-woven fleece (1) used is a polyester, polypropylene, polyamide, viscose or cotton based product, produced according to a dry laid, wet-laid or spunbond process.

12. Laminate according to any of claims 1 to 11, whereby the flexible web (1) has a thickness of 3 µm to 250 µm.

13. Laminate according to any of claims 1 to 12, whereby flexible webs (2) and/or (3) are water permeable or semipermeable webs.

14. Laminate according to claim 13, **characterized in that** the water permeable web(s) (2) or (3) is/are paper, kraft paper, water resistant paper, coated paper, base paper for heat sensitive recording coating or for ink jet coating, or a non-woven fleece web as defined in claim 11, fibre reinforced paper, or cardboard.

15. Laminate according to any of claims 13 or 14, **characterized in that** the water permeable web(s) (2) and/or (3) has/have a water vapor transmission of 50 g/m²/24h to 6000g/m²/24h, preferably 200 g/m²/24h to 3000g/m²/24h at 20°C and 85% rel. humidity.

16. Laminate according to any of claims 1 to 15, **characterized in that** the flexible web (1) is laminated to the flexible web(s) (2) and/or (3) by water based adhesive, solvent based adhesive, hot melt adhesive or solvent free chemically curing adhesive.

17. Laminate according to any of claims 1 to 16, **characterized in that** the adhesive contains an emulsion of polymers or copolymers or terpolymers made from acrylate, styrene-acrylate, butadien-styrene, butadien-styrene-acrylate, vinylacetate, ethylen-vinylacetat or polyurethane or polyester and/or water soluble polymeric components.

18. Laminate according to any of claims 1 to 17, **characterized in that** the adhesive film has a glass transition temperature Tg lower than 40 °C.

19. Laminate according to any of claims 1 to 18, **characterized in that** the adhesive is crosslinked.

20. Laminate according to any of claims 1 to 19, **characterized in that** the adhesive or at least one of the flexible webs is transparent, white or coloured.

21. Laminate according to any of claims 1 to 20, **characterized in that** the lamination process according to which the 3-ply laminates are prepared is a roll-to-roll lamination process comprising coating of at least one side of the flexible web (1) with the film forming adhesive, and contacting the adhesive side(s) of the flexible web (1) to the flexible web (2) and/or (3) on a transport roller while the combined webs are touching the transport roller from one side on a length of more than 5 mm without being further pressurised.
